## Europäisches Patentamt

## European Patent Office

## Office européen des brevets

(11) Veröffentlichungsnummer: **0 184 702**

**B1**

(12) # EUROPÄISCHE PATENTSCHRIFT

(45) Veröffentlichungstag der Patentschrift:
04.01.89

(51) Int. Cl.⁴: **F 16 L 29/00, F 16 L 37/28**

(21) Anmeldenummer: 85114842.9

(22) Anmeldetag: 22.11.85

(54) **Auch bei unter Druck stehendem Stecker kuppelbare Rohrabreisskupplung für Hydraulikleitungen.**

(30) Priorität: 08.12.84 DE 3444796

(43) Veröffentlichungstag der Anmeldung:
18.06.86 Patentblatt 86/25

(45) Bekanntmachung des Hinweises auf die Patenterteilung:
04.01.89 Patentblatt 89/1

(84) Benannte Vertragsstaaten:
FR GB IT

(56) Entgegenhaltungen:
DE-A-2 520 393
DE-A-3 238 410

(73) Patentinhaber: Aeroquip GmbH, Ruhrstrasse 11,
D-7570 Baden- Baden (DE)

(72) Erfinder: Steuerwald, Alfred, Kirchheim Bolander
Strasse 4, D-6719 Orbis (DE)

(74) Vertreter: Patentanwälte Dipl.- Ing. Rudolf
Bibrach Dipl.- Ing. Elmar Rehberg, Postfach 1453
Pütterweg 6, D-3400 Göttingen (DE)

**Beschreibung**

Die Erfindung bezieht sich auf eine Rohrabreißkupplung mit den im Oberbegriff des Anspruches 1 angegebenen Merkmalen. Jede derartige Kupplung weist üblicherweise einen Stecker und eine Muffe auf, wobei die Kupplung sowohl dann kuppelbar sein soll, wenn der Stecker unter Druck steht, als auch dann, wenn der Stecker drucklos ist. Eine Rohrabreißkupplung ist eine solche Kupplung, bei der die übliche Schiebehülse normaler Druck-Zug-Kupplungen ortsfest gelagert ist und somit als Verriegelungshülse bezeichnet werden kann. Bei einer Rohrabreißkupplung wird durch einen gegenüber der Schiebehülse verschiebbaren Kupplungskörper die Abreißfunktion erreicht.

Eine Rohrabreißkupplung mit den im Oberbegriff des Anspruches 1 aufgeführten Merkmalen ist aus der DE-OS-3 238 410 bekannt. Bei dieser Kupplung läßt sich nicht nur der Stecker unabhängig davon, ob er unter Druck steht oder nicht, mit der Muffe kuppeln. Es wird vielmehr auch bereits eine Verriegelung der Ventilkörper nach ordnungsgemäßem Kupplungsvorgang erreicht, so daß ein Zuschlagen des freien Druchgangs durch die Kupplung nicht möglich ist, wiederum gleichgültig, in welcher Richtung die Druchströmung der Kupplung erfolgt. Zur Verriegelung der Ventilkörper in dieser Stellung ist der Sternkörper der Muffe in ihrem Kupplungskörper gegen die Kraft der zugehörigen Schließkörper verschieblich gelagert. Der Sternkörper besitzt Fortsätze, der mit einem gehäusefesten, also mit der Verriegelungshülse verbundenen Anschlag zusammenarbeitet. Der Schaft des im Sternkörper geführten Ventilkörpers ist relativ lang ausgebildet und besitzt eine Mehrzahl von Nuten, die teils relativ zum einen Ende und teils zum anderen Ende der axialen Erstreckung des Sternkörpers am Schaft des Ventilkörpers angeordnet sind. Der Sternkörper wird von einer Schenkelfeder mit Spiel überbrückt. Die Schenkelfeder kann zum Zwecke der Verriegelung des Ventilkörpers in eine Verriegelungsnut des Ventilkörpers eingreifen. Sie wird in ihrer Bewegung jedoch von der Bewegung des Sternkörpers gesteuert, wobei die miteinander in Wirkkontakt tretenden Teile vergleichsweise kompliziert und mit engen Toleranzen behaftet hergestellt werden müssen, weil zur Übertragung der Bewegung teilweise die Reibung zwischen den Einzelteilen ausgenutzt wird.

Eine ähnliche, jedoch noch sehr viel komplizierter aufgebaute Rohrabreißkupplung zeigt die US-PS-3 791 411. Diese Kupplung ist zusätzlich auch noch dann kuppelbar, wenn die muffenseitige Leitung während des Kupplungsvorganges unter Druck steht. Bei der dortigen Kupplung soll zwar auch dann eine Verriegelung der beiden Ventilkörper möglich sein, wenn ein druckloser Stecker gekuppelt wurde; dabei wird ein im Innern angeordnetes Kugelgesperre mit einer radial federbelasteten Kugel benutzt. Im Ventilkörper der Muffe ist gegen eine weitere Feder begrenzt verschiebbar gelagert ein Kolben vorgesehen, der mit der Stirnfläche des Ventilkörpers des Steckers ebenfalls zusammenarbeitet. Die Anzahl der Einzelteile ist damit erhöht und es finden insgesamt vier Federn Verwendung, die kraftmäßig aufeinander sorgfältig abgestimmt sein müssen. Hierdurch wird die Kupplung störanfällig. Die Betriebssicherheit wird beeinträchtigt. Ob beim Kuppeln eines drucklosen Steckers eine Verriegelungsstellung erreicht wird, erscheint zweifelhaft. Beim Kuppeln eines unter Druck stehenden Steckers muß der Durchgang durch die Kupplung - wie allgemein üblich - durch Einschalten der Druckquelle muffenseitig erzielt werden. Ob dabei der volle einfache Ventilkörperhub des Ventilkörpers des Steckers erreicht wird, ist wiederum von der Mengenströmung abhängig.

Die DE-AS-2 712 117 zeigt eine Zug-Druck-Kupplung, bei der ebenfalls der Ventilkörper des Steckers nur um den einfachen Ventilkörperhub verschiebbar im Sternkörper gelagert ist. Der Sternkörper bildet auch hier einen festen Anschlag für die Begrenzung des einfachen Ventilkörperhubes des Ventilkörpers des Steckers. Es ist hier ein Sperrmittel in Form eines radial verschiebbaren federbelasteten Nockens vorgesehen, der in den Verschiebeweg des abgesetzten Schaftes des Ventilkörpers der Muffe eingreift und darüber hinaus mit einer Schrägfläche zusammenarbeitet. Hierdurch wird eine Verriegelung der Ventilkörper nach ordnungsgemäßen Kupplungsvorgang erreicht. Dabei ist Voraussetzung, daß die Schließfeder, die den Ventilkörper der Muffe in Schließrichtung belastet, stärker dimensioniert ist als die entsprechende Schließfeder des Steckers. Damit soll erreicht werden, daß in der gekuppelten und geöffneten Stellung die Ventilkörper an dem Anschlag anliegen, der den einfachen Ventilkörperhub des Steckers begrenzt. Dieser Kraftüberschuß bildet je nach dem Auftreten der Rückströmungen nur ein relativ kleines Hindernis. Es ist damit durchaus möglich, daß der Ventilkörper des Steckers zuschlägt. Wird nach einem solchen Zuschlag jedoch der Durchgang durch die gekuppelte Kupplung wieder geöffnet, dann findet eine Verriegelung durch den radial federbelasteten Nocken statt. Dies bedeutet, daß zu einer ordnungsgemäßen Verriegelung vom Ventilkörper der Muffe nicht nur der einfache Öffnungshub, sondern ein Weg, der größer ist als der einfache Öffnungshub, zurückgelegt werden muß, wobei nur in einem solchen Falle die Verriegelung stattfindet. Wird dagegen ein druckloser Stecker gekuppelt, dann wird infolge der Abstimmung der Schließfedern der Ventilkörper der Muffe nur den einfachen Öffnungshub zurücklegen, so daß eine Verriegelung nicht stattfindet. Das einmalige Zuschlagen des Ventilkörpers des Steckers bei auftretenden Rückströmungen ist damit die Voraussetzung für das Erreichen der Verriegelungsstellung der Ventilkörper. Eine solche Funktionsweise kann nicht befriedigen.

Die DE-OS-3 015 601 zeigt im Ausführungsbeispiel eine Zug-Druck-Kupplung, bei der im Sternkörper der Muffe ein Kugelgesperre untergebracht ist, welches, da im Innern angeordnet, nicht durch eine Verriegelungshülse betätigt werden kann. Dieses Kugelgesperre ist mit einem Betätigungsgesperre, welches ebenfalls Kugeln aufweist, kombiniert. Es wird hier die Verschieberichtung zur Betätigung dieses zweiten Kugelgesperres herangezogen, nämlich die Umkehr der Bewegungsrichtung des Ventilkörpers der Muffe während bzw. nach dem Kuppelvorgang. Die Schließfeder des Ventilkörpers des Steckers ist stärker dimensioniert und besitzt damit eine größere Kraft als die Schließfeder des Ventilkörpers der Muffe. Auf diese Weise wird erreicht, daß beim Kuppeln eines drucklosen Steckers sowie auch beim Kuppeln eines unter Druck stehenden Steckers immer der gleiche Bewegungsablauf erfolgt und auch die einzelnen Teile der Kupplung immer die gleiche Relativlage zueinander einnehmen. Nach dem Verriegeln des Steckers in der Muffe kann der innere Durchgang durch die Kupplung nur dadurch herbeigeführt werden, daß die muffenseitig vorgesehene Druckquelle eingeschaltet wird und mit ihrer Hilfe das Öffnen des Ventilkörpers des Steckers erfolgt. Ob dabei der Ventilkörper des Steckers den vollen einfachen Ventilhub zurücklegt, ist im wesentlichen von der durch die Kupplung fließenden Strömungsmenge und den dabei auf den Ventilkörper des Steckers einwirkenden dynamischen Kräften abhängig. Reichen diese Kräfte aus, um den einfachen Ventilkörperhub am Stecker zu vollenden, dann verriegelt das im Innern angeordnete Kugelgesperre zuverlässig, und zwar gleichgültig, ob der Stecker vorher unter Druck stand oder nicht. Wird aber die betreffende Mengenströmung nicht erreicht und öffnet demzufolge der Ventilkörper des Steckers nicht durch Erreichen des vollen einfachen Ventilkörperhubes, dann können sich Zwischenstellungen ergeben, in denen die beiden Ventilkörper nicht blockiert sind, so daß ein Zuschlagen des Ventilkörpers des Steckers bei auftretenden Rückströmungen eintreten kann.

Der Erfindung liegt die Aufgabe zugrunde, eine Rohrabreißkupplung der eingangs beschriebenen Art aufzuzeigen, die bei einfachem Aufbau und hoher Betriebssicherheit eine spielfreie Verriegelung der Ventilkörper des Steckers und der Muffe im Betriebszustand erreicht. Dabei soll der Stecker sowohl drucklos als auch unter Druck stehend gekuppelt werden können. Die Verriegelung der beiden Ventilkörper bei drucklos gekuppeltem Stecker soll sofort nach der Beendigung des Kupplungsvorganges eintreten, noch bevor die muffenseitige Druckmittelquelle eingeschaltet ist. Der Stecker soll auch dann aus der Muffe herausziehbar sein, wenn er unter Druck stehend gekuppelt wurde und muffenseitig die Druckquelle noch nicht eingeschaltet worden ist, wie es bei einem versehentlich in die falsche Muffe eingekuppelten Stecker der Fall ist.

Erfindungsgemäß wird dies dadurch erreicht, daß der Sternkörper der Muffe ortsfest an dem verschiebbaren Kupplungskörper gelagert ist und eine Zylinderlauffläche aufweist, daß der Schaft des Ventilkörpers der Muffe kolbenartig ausgebildet und in der Zylinderlauffläche dichtend geführt ist, und daß als Sperrmittel im Innern des Sternkörpers ein von der Zylinderlauffläche und dem Schaft des Ventilkörpers begrenzter Druckraum vorgesehen ist, der einerseits über ein von dem gehäuseseitigen Anschlag gesteuertes Auslaßventil und andererseits über ein in den Druckraum hinein öffnendes Rückschlagventil von dem vom Hydraulikmedium durchflossenen Innenraum der Muffe abgetrennt bzw. mit diesem verbunden ist. Dies bedeutet zunächst einmal, daß der Sternkörper nicht mehr relativ-beweglich zu dem Kupplungskörper ist, sondern mit diesem gleichsam verschiebefest nach beiden Richtungen verbunden ist, so daß er die Bewegungen des Kupplungskörpers mitmacht. Die hieraus resultierende Relativbewegung ermöglicht in Verbindung mit dem gehäuseseitigen Anschlag eine Ventilsteuerung. Da das Hydraulikmedium in der Muffe ohnehin vorhanden ist, nutzt die vorliegende Erfindung dieses Hydraulikmedium in geschickter Weise zur Realisierung des Sperrmittels aus. Die Erfindung ist somit nur bei solchen Rohrabreißkupplungen einsetzbar, die für hydraulische Medien - im Gegensatz zu Gasen - bestimmt sind. Solche hydraulischen Medien sind bekanntlich inkompressibel, so daß sich das Medium selbst für die Verriegelung der Ventilkörper heranziehen läßt. Auch bei den bisherigen Ausführungen ist der Schaft des Ventilkörpers in einer Bohrung des Sternkörpers verschiebbar gelagert, wobei jedoch eine Dichtwirkung nicht eintritt. Es bereitet keinen großen herstellungsmäßigen Aufwand, die Bohrung als Zylinderlauffläche zu bearbeiten und den Schaft des Ventilkörpers mit einer Dichtung zu versehen, so daß hiermit letztlich aus den ohnehin vorhandenen Teilen des Sternkörpers und des Ventilkörpers eine Kolben-Zylinder-Einheit geschaffen wird, die einen Druckraum umschließt. Dieser Druckraum muß nun einerseits mit einem gesteuerten Auslaßventil und andererseits mit einem in den Druckraum hinein öffnenden Rückschlagventil ausgestattet sein, um den Druckraum in der Entriegelungsstellung des Sperrmittels in freier Verbindung zu dem Innenraum der Muffe der Rohrabreißkupplung zu haben. Andererseits muß es möglich sein, daß der Ventilkörper der Muffe in Richtung auf seine Schließlage durch die Schließfeder beweglich ist, wobei der Druckraum über das Rückschlagventil das Hydraulikmedium aus dem Innenraum der Muffe nachsaugen kann. Die erfindungsgemäße Rohrabreißkupplung weist den besonderen Vorteil auf, daß die Verriegelung nicht nur dann erreicht wird, wenn der Ventilkörper des Steckers vollständig geöffnet ist, also gegen seinen einstellbaren Anschlag anliegt, sondern auch in den verschiedenen Zwischenstellungen bei nicht vollkommen erreichter Offenstellung. In der gekuppelten Stellung zwischen Stecker und Muffe und bei der dann eingetretenen Verriegelung der beiden Ventilkörper ist sowohl das gesteuerte Auslaßventil als auch das Rückschlagventil in der Schließstellung, so daß das im Druckraum befindliche hydraulische Medium eingeschlossen ist und somit ein wesentliches Teil des Sperrmittels bildet. Dabei erbringt die Verwendung des hydraulischen Mediums als Sperrmittl bzw. als wesentlicher Bestandteil desselben den besonderen Vorteil mit sich, daß die Verriegelung spielfrei arbeitet, weil über das Rückschlagventil jeweils Hydraulikmedium nachgesaugt werden kann. Andererseits spielen Herstellungstoleranzen, insbes. im Überstand der Ventilkörper entsprechend dem einfachen Ventilkörperhub, keine Rolle; das im Druckraum eingeschlossene Volumen paßt sich automatisch bei dem Verriegelungsvorgang der beiden Ventilkörper an die jeweiligen Toleranzen an. Das gesteuerte Auslaßventil muß in Verbindung mit dem gehäuseseitigen Anschlag so arbeiten, daß es aus seiner Schließ-in die Offenstellung dann überführt wird, wenn der Ventilkörper der Muffe gegenüber dem ortsfesten Anschlag noch nicht den einfachen Ventilkörperhub zurückgelegt hat; mit anderen Worten muß die Offenstellung innerhalb des einfachen Ventilkörperhubs erreicht werden. Ein weiterer Vorteil der Erfindung liegt darin, daß durch die Anordnung des Sperrmittels der freie Durchströmquerschnitt kaum beeinträchtigt wird, so daß die Rohrabreißkupplung einen sehr geringen Druckverlust aufweist. Durch die kolbenartige Ausbildung zwischen dem Schaft des Ventilkörpers und der Zylinderlauffläche des Sternkörpers ergibt sich zusätzlich eine besonders gute und exakte Führung des Ventilkörpers der Muffe, so daß es entbehrlich ist, den Ventilkörper mit einer zweiten Führung zu versehen.

Der Sternkörper kann auf seiner dem gehäuseseitigen Anschlag zugekehrten Seite koaxial zur Achse der Muffe einen Ventilsitz für den Ventilkörper des Rückschlagventils aufweisen. Das Rückschlagventil ist damit koaxial untergebracht, und zwar an einer Stelle, an der es den freien Durchgang durch die Kupplung nicht behindert. Der bauliche Aufwand für dieses Rückschlagventil ist extrem gering. Der Ventilsitz kann ohne weiteres aus dem Material des Sternkörpers gebildet werden. Sodann ist nur noch z. B. eine Kugel als Ventilkörper und eine Druckfeder erforderlich. Diese den Öffnungsdruck des Rückschlagventils bestimmende Druckfeder kann sehr klein und mit geringer Anpreßkraft ausgelegt sein, damit kein nennenswerter Druckunterschied zwischen dem Innenraum der Muffe und dem Druckraum entsteht, sondern der Druckraum bei Bewegungen des Ventilkörpers der Muffe in Richtung Schließstellung behinderungsfrei nachsaugen kann.

Der Ventilkörper des Rückschlagventils kann auf einer im Druckraum angeordneten Druckfeder abgestützt sein, so daß diese Druckfeder platzsparend untergebracht ist. Das andere Ende der Druckfeder kann entweder am Schaft des Ventilkörpers oder auch am Sternkörper abgestützt sein. Im letzteren Falle ist der erforderliche Federweg der Druckfeder unabhängig von dem doppelten Hub des Ventilkörpers, so daß die Druckfeder selbst sehr klein ausgebildet sein kann. Es ist aber auch möglich, die Druckfeder außerhalb des Druckraumes anzuordnen und auf den Ventilkörper des Rückschlagventils einwirken zu lassen.

Besonders vorteilhaft ist es, wenn das Rückschlagventil und das gesteuerte Auslaßventil baulich vereinigt sind. Ein in diesem Falle gemeinsamer Ventilkörper weist dann in Richtung auf den gehäuseseitigen Anschlag in den Innenraum der Muffe vorstehende Fortsätze auf, mit denen er mit dem gehäuseseitigen Anschlag in Wirkverbindung tritt. Die Ventilkörper des Rückschlagventils und des gesteuerten Auslaßventils sind damit zu einem Bauteil zusammengefaßt, welches ohne weiteres in der Lage ist, diese Doppelfunktion auszuüben. Dies ist deshalb der Fall, weil die Offenstellung des Ventilkörpers des Auslaßventils dem Herausführen von Hydraulikmedium aus dem Druckraum dient, während der Ventilkörper des Rückschlagventils in seiner Offenstellung das Nachströmen von Hydraulikmedium aus dem Innern der Muffe in den Druckraum hinein zuläßt. Diese beiden Funktionen überlappen sich zeitlich nicht. Der gemeinsame Ventilkörper des Rückschlagventils und des gesteuerten Auslaßventils kann auch auf einer außerhalb des Druckraums angeordneten Druckfeder abgestützt sein, so daß diese Druckfeder wiederum unabhängig von dem einfachen bzw. doppelten Hub des Ventilkörpers der Muffe ist.

Eine andere Ausführungsmöglichkeit besteht darin, daß das gesteuerte Auslaßventil einen von dem Ventilkörper des Rückschlagventils getrennten ringförmigen Ventilkörper aufweist, der einen Fortsatz des Sternkörpers umgibt, wobei der Druckraum vermittels einer etwa radial angeordneten Bohrung im Fortsatz an den Innenraum der Muffe anschließbar ist, und daß am ringförmigen Ventilkörper die Flügel des Sternkörpers überbrückende und in Richtung auf den gehäuseseitigen Anschlag vorstehende Fortsätze vorgesehen sind. Rückschlagventil und gesteuertes Auslaßventil sind damit getrennt voneinander aufgebaut und angeordnet. Die Fortsätze an dem ringförmigen Ventilkörper übergreifen die Flügel des Sternkörpers mit Spiel, so daß sie mit dem gehäuseseitigen Anschlag in Wirkverbindung treten können, um das gesteuerte Auslaßventil zu öffnen. Der ringförmige Ventilkörper des gesteuerten Auslaßventils kann dabei auf der Schließfeder des Ventilkörpers der Muffe abgestützt sein, so daß diese ohnehin erforderliche Schließfeder gleichzeitig auch die Feder des gesteuerten Auslaßventils darstellt und sich somit die Anordnung einer gesonderten Feder für den ringförmigen Ventilkörper des gesteuerten Auslaßventils erübrigt. Der ringförmige Ventilkörper kann dabei nach Schiebeart arbeitend vorgesehen sein. Es ist aber auch möglich, daß der ringförmige Ventilkörper in der Schließstellung gegen eine kegelförmig angeordnete Sitzfläche am Übergang des Fortsatzes des Sternkörpers zu den Flügeln angedrückt ist. Damit wird die Schließstellung des gesteuerten Auslaßventils verbessert bzw. sicherer.

Ausführungsbeispiele der Erfindung sind in den Zeichnungen dargestellt und werden im folgenden näher beschrieben. Es zeigen:

Fig. 1 eine Schnittdarstellung der Rohrabreißkupplung in einer ersten Ausführungsform in entkuppelter Stellung bzw. zu Beginn eines Kupplungsvorganges,

Fig. 2 die Darstellung der Teile gemäß Fig. 1 nach dem Einschieben eines unter Druck stehenden Steckers und nach Zurücklegung des doppelten Ventilkörperhubes des Ventilkörpers der Muffe,

Fig. 3 die Relativlage der Teile des Ausführungsbeispiels der Fig. 1 und 2 nach beendetem Kupplungsvorgang in der Verriegelungsstellung der Ventilkörper,

Fig. 4 eine Schnittdarstellung der Rohrabreißkupplung in einer zweiten Ausführungsform in entkuppelter Stellung bzw. zu Beginn eines Kupplungsvorganges,

Fig. 5 die Darstellung der Teile der Rohrabreißkupplung gemäß Fig. 4 nach dem vollständigen Einschieben eines unter Druck stehenden Steckers und

Fig. 6 die Relativlage der Teile des Ausführungsbeispiels der Fig. 4 und 5 nach Beendigung des Kupplungsvorganges und Verriegelung der Ventilkörper.

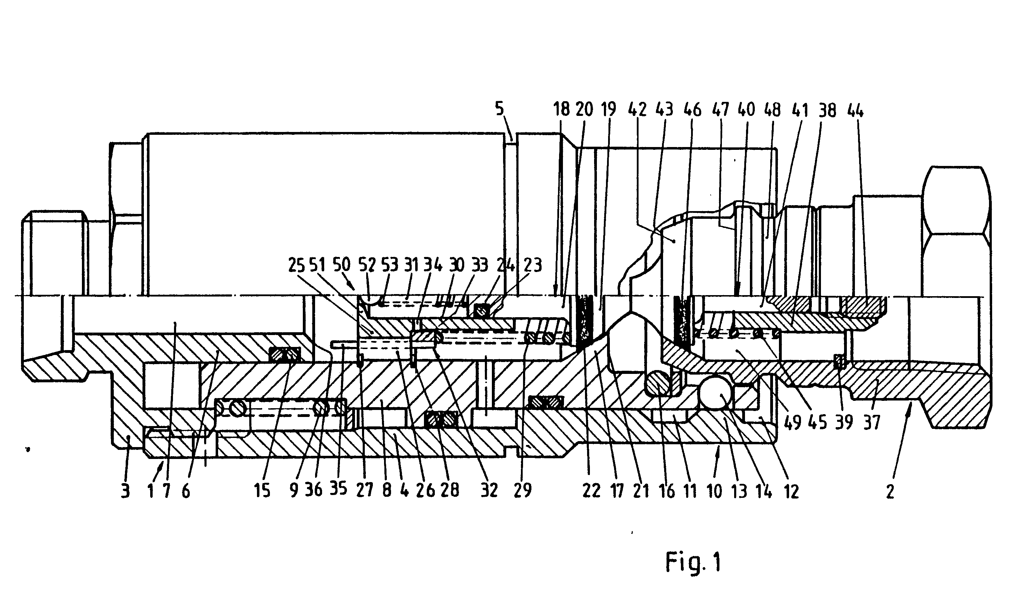

In Fig. 1 ist die Muffe 1 und der zugehörige Stecker 2 der Rohrabreißkupplung in entkuppelter Stellung dargestellt. Der Stecker 2 möge unter Druck stehen. Die Muffe 1 besitzt ein Gehäuse 3, mit dem über ein Gewinde eine Verriegelungshülse 4 fest verbunden ist. Die Verriegelungshülse 4 ist also gegenüber dem Gehäuse 3 nicht beweglich, sondern wird üblicherweise über eine Nut 5, beispielsweise in einer Schottwandung, oder direkt an einem ortsfesten Rohr ortsfest gelagert. Ein Fortsatz 6 des Gehäuses 3 ragt in den Innenraum 7 der Muffe 1 ein und bildet einen Großteil der axialen Durchgangsbohrung der Muffe 1. Innerhalb bzw. zwischen diesen gehäusefesten Teilen ist ein Kupplungskörper 8 über eine Gesperrefeder 9 begrenzt verschiebbar gelagert bzw. gefesselt geführt. Zwischen der Verriegelungshülse 4 und dem Kupplungskörper 8 ist ein übliches Kugelgesperre 10 angeordnet, welches aus zwei Ausweichnuten 11 und 12 und einem dazwischen liegenden Verriegelungsring 13 an der Verriegelungshülse 4 und aus in Durchbrechungen des Kupplungskörpers 8 gelagerten Kugeln 14 besteht. Mit dem Kupplungskörper 8 arbeitet eine am Fortsatz 6 gelagerte Dichtung 15 zusammen. Eine Dichtung 16 ist für die Abdichtung des Steckers 2 in der Muffe 1 vorgesehen.

Der Kupplungskörper 8 besitzt einen eingezogenen Rand 17, mit dem ein Ventilkörper 18, der einen Kopf 19 und einen Schaft 20 besitzt, zusammenarbeitet; der Kopf 19 ragt über eine am eingezogene Rand 17 gebildete Stirnfläche 21 um den einfachen Ventilkörperhub in Richtung auf das Kugelgesperre 10 hinaus und bildet andererseits mit dem eingezogenen Rand 17 des Kupplungskörpers 8 ein Rückschlagventil 17, 19. Zu diesem Zweck ist auf dem Kopf 19 eine Dichtung 22 angeordnet. Der Schaft 20 des Ventilkörpers 18 besitzt eine Nut 23, in die eine Dichtung 24 eingelegt ist. Der Schaft 20 des Ventilkörpers 18 ist damit kolbenartig ausgebildet.

In dem Kupplungskörper 8, den Schaft 20 des Ventilkörpers 18 umgebend, ist ein Sternkörper 25 ortsfest und damit nicht beweglich gegenüber dem Kupplungskörper 8 gelagert der über den Umfang verteilt drei abstehende Flügel 26 aufweist, so daß die Durchströmung des Kupplungskörpers 8 durch den Sternkörper 25 nicht behindert wird, wenn das Rückschlagventil 17, 19 geöffnet ist. Der Sternkörper 25 kann beispielsweise mit Hilfe zweier Sicherungsringe 27 und 28 ortsfest auf dem Kupplungskörper 8 gelagert sein. Der Ventilkörper 18 wird von einer Schließfeder 29, die in der dargestellten Weise angeordnet ist, in Schließrichtung kraftmäßig beaufschlagt.

Der Sternkörper 25 weist außerdem eine Zylinderlauffläche 30 auf, die auf den Durchmesser des Schaftes 20 bzw. der Dichtung 24 abgestimmt ist. Diese Zylinderlauffläche 30 umschließt eine Druckraum 31, der im Sternkörper 25 angeordnet ist. Mit diesem Druckraum 31 steht ein gesteuertes Auslaßventil 32 in Wirkverbindung, welches hier einen ringförmigen Ventilkörper 33 aufweist, der mit einer in etwa radial geführten Bohrung 34 in Wirkverbindung steht bzw. an den Druckraum 31 anschließt. Der ringförmige Ventilkörper 33 ist hiermit schiebeartig ausgebildet, stützt sich auf der Schließfeder 29 ab und nimmt je nach seiner Relativlage zu den radialen Bohrungen 34 seine Schließ-oder seine Öffnungsstellung ein. Der ringförmige Ventilkörper 33 ist mit sich axial erstreckenden und die Flügel 26 des Sternkörpers 25 überbrückenden Fortsätzen 35 ausgestattet, die bis in die Nähe eines ortsfesten Anschlages 36 an dem gehäuseseitigen Fortsatz 6 vorragen und mit diesem in Wirkverbindung treten, wenn der Kupplungskörper 8 und damit auch der Sternkörper 25 um den einfachen Ventilkörperhub gegenüber dem Gehäuse 3 und der Verriegelungshülse 4 in die Muffe 1 hineinverschoben werden. Während dieses Hubes kommen die radialen Bohrungen 34 von dem ringförmigen Ventilkörper 33 frei, so daß das gesteuerte Auslaßventil 32 damit geöffnet ist. Umgekehrt beaufschlagt die Schließfeder 29 den ringförmigen Ventilkörper 33 in Richtung auf die Schließstellung, die dann eingenommen wird, wenn die Fortsätze 35 nicht an dem ortsfesten Anschlag 36 in Anlage sind. Es versteht sich, daß zusätzlich zu der Schließfeder 29, die in ihrer ersten Funktion für die Beaufschlagung des Ventilkörpers 18 vorgesehen ist, auch eine zweite separate Feder für die Beaufschlagung des ringförmigen Ventilkörpers 33 in die Schließstellung vorgesehen sein könnte. Es ist auch möglich, daß die Fortsätze 35 auch mit dem Anschlag 36 bzw. dem Fortsatz 6 z. B. einstückig verbunden sein könnten, wobei dann der ringförmige Ventilkörper 33 ein separates Teil bilden könnte. Der mögliche Hub der Fortsätze 35 bzw. des ringförmigen Ventilkörpers 33 bis zum Erreichen des ortsfesten Anschlages 36 kann gegenüber dem einfachen Ventilkörperhub sehr klein ausgebildet sein. Dieser Hub ist auf jeden Fall kleiner als der einfache Ventilkörperhub, weil das gesteuerte Auslaßventil 32 in seiner Offenstellung sein muß, wenn der einfache Ventilkörperhub zurückgelegt ist.

Außer dem gesteuerten Auslaßventil 32 ist noch ein Rückschlagventil 50 im bzw. am Sternkörper 25 vorgesehen, d. h. der Innenraum 7 der Muffe 1 steht über dieses Rückschlagventil 50 mit dem Druckraum 31 im Sternkörper 25 in Verbindung bzw. ist von diesem abgesperrt, je nach der Stellung des Rückschlagventils. Das Rückschlagventil 50 ist auf jeden Fall so ausgebildet und eingebaut, daß es von dem Innenraum 7 in den Druckraum 31 hinein öffnet, also seine Offenstellung dann einnimmt, wenn sich das Volumen des Druckraumes 31 vergrößert, so daß Hydraulikmedium aus dem Innenraum 7 in den Druckraum 31 nachströmen kann. Bei Verkleinerung des Volumens des Druckraumes 31 befindet sich das Rückschlagventil 50 in der Schließstellung, so daß eine Ausströmung von Hydraulikmedium aus dem Druckraum 31 in den Innenraum 7 nur über das gesteuerte Auslaßventil 32 erfolgen kann.

Im einzelnen kann das Rückschlagventil 50 aus einem Ventilsitz 51 am Sternkörper 25, einem z. B. als Kugel ausgebildeten Ventilkörper 52 und einer Druckfeder 53 bestehen, die den Ventilkörper 52 mit geringem Anpreßdruck auf den Ventilsitz 51 anpreßt. Die Druckfeder 53 kann im Druckraum 31 oder auch außerhalb desselben vorgesehen sein. Bei Anordnung im Druckraum 31 kann sie entweder am Ende des Schaftes 20 des Ventilkörpers 18 abgestützt sein; hierbei muß die Druckfeder 53 relativ lang ausgebildet sein und eine große Zusammendrückung aufweisen, weil sie den zweifachen Ventilkörperhub zulassen muß. Es ist aber auch möglich, das andere Ende der Druckfeder 53 außerhalb des doppelten Ventilkörperhubes, z. B. an einem in der Zylinderlauffläche 30 angeordneten Sicherungsring abzustützen. Der Druckraum 31 wird somit von der Zylinderlauffläche 30, dem Schaft 20 bzw. der Dichtung 24 des Ventilkörpers 18, dem gesteuerten Auslaßventil 32 und dem Rückschlagventil 50 abgeschlossen, wenn die beiden Ventile 32, 50 in der Schließstellung sind.

Der Stecker 2 ist in bekannter Weise ausgebildet. Er besitzt ein Gehäuse 37, in dem ebenfalls ein Sternkörper 38 mit drei Flügeln über den Umfang mit Hilfe eines Sicherungsrings 39 gelagert ist. Im Sternkörper 38 ist ein Ventilkörper 40 mit seinem Schaft 41 um den einfachen Ventilkörperhub verschiebbar gelagert. Auch hier steht ein Kopf 42 des Ventilkörpers 40 um den einfachen Ventilkörperhub gegenüber einer Stirnfläche 43 am Gehäuse 37 über. Während der Ventilkörper 18 der Muffe 1 den doppelten Ventilkörperhub (und mehr) zurücklegen kann, ist die Bewegungsmöglichkeit des Ventilkörpers 40 durch eine im Sternkörper 38 mit Hilfe eines Gewindes verstellbar gelagerten Anschlagschraube 44 begrenzt. Zu dem Ventilkörper 40 gehört eine Schließfeder 45, die sich andererseits an dem Sternkörper 38 abstützt. Die Schließfeder 45 ist in ihrer Kraft und ihren sonstigen Eigenschaften wie die Schließfeder 29 des Ventilkörpers 18 der Muffe 1 ausgebildet. Beide Schließfedern 29 und 45 sind vorgespannt eingebaut. Es können hier ggfs. gleiche Schließfedern 29 und 45 eingesetzt werden. Es versteht sich, daß der Kopf 42 des Ventilkörpers 40 mit einer Dichtung 46 versehen ist. Das Gehäuse 37 des Steckers 2 besitzt einen umlaufenden Bund 47 und nachfolgend eine Verkeilungsnut 48 für den Eintritt der Kugeln 14 des Kugelgesperres 10 in der gekuppelten Stellung bzw. für das Zusammenwirken mit dem Kugelgesperre 10. Ein solcher Stecker 2 kann mit einer Muffe 1 einmal dann gekuppelt werden, wenn der Stecker 2 drucklos ist, sich also im Innenraum 49 kein unter Druck stehendes Medium befindet. In einem solchen Falle wird angenommen, daß beim Kuppeln der Ventilkörper 40 seine Schließstellung gegen die Kraft der Schließfeder 45 verlassen kann und sich in Richtung auf die Anschlagschraube 44 bewegt. Andererseits kann aber im Innenraum 49 eines Steckers 2 und damit in der an diesem angeschlossenen Leitung ein Medium unter Druck eingesperrt sein, wobei der Druck dann den Ventilkörper 40 zusätzlich in Schließrichtung beaufschlagt. In einem solchen Fall wird angenommen, daß sich beim Kuppeln (manueller Teil) der Ventilkörper 40 aus seiner Schließlage am Gehäuse 37 nicht bewegen läßt, also seine geschlossene Stellung beibehält. Das Öffnen des am Steckers 2 gebildeten Rückschlagventils geschieht dann nach vollendetem Kupplungsvorgang durch den muffenseitig einsetzenden Druck einer Druckquelle, z. B. eines

Hydraulikmotors oder einer Pumpe. Die einzelnen Teile der Muffe 1 und des Steckers 2 besitzen die aus den Fig. 1 bis 3 erschichtlichen geometrischen Abmessungen.

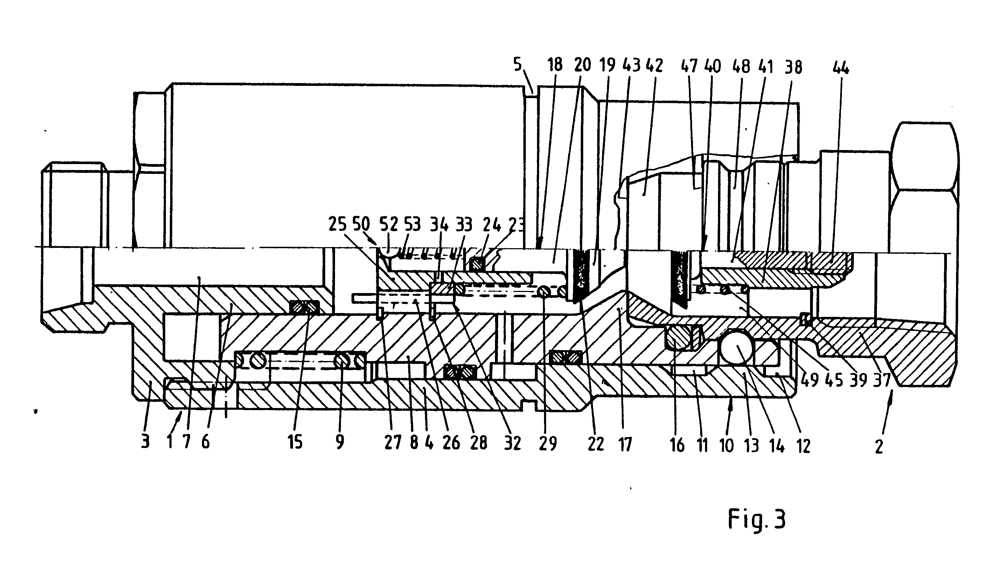

Die Wirkungsweise der Rohrabreißkupplung soll im folgenden für verschiedene Bewegungsabläufe aufgezeigt werden. Dabei ist durch die Folge der Fig. 1 - 3 veranschaulicht, welche Relativlage die einzelnen Teile der Kupplung beim Einkuppeln des Steckers 2 jeweils zueinander einnehmen. Anhand der Fig. 1 und 3 sei zunächst das Kuppeln eines drucklosen Steckers 2 beschrieben:

In der Ausgangsstellung nehmen die Teile die aus Fig. 1 ersichtliche Relativlage ein. Beide Ventilkörper 18 und 40 befinden sich in der Schließlage. Der Innenraum 49 ist drucklos, ebenso der Innenraum 7 in der Muffe 1. Beim Einschieben des Steckers 2 in die Muffe 1 gelangen die überstehenden Köpfe 19 und 42 der beiden Ventilkörper 18 und 40 aneinander zur Anlage. Dies geschieht kurz vor oder nachdem der Bund 47 auf die Kugeln 14 des Kugelgesperres 10 auftrifft, so daß beim weiteren Eindrücken des Steckers 2 in die Muffe 1 der Kupplungskörper 8 relativ gegenüber dem ortsfesten Gehäuse 3 verschoben wird. Der Ventilkörper des Steckers 2 wird dabei mehr oder weniger weit öffnen, weil der Ventilkörper 18 der Muffe 1 infolge seiner hydraulischen Verriegelung nicht öffnen kann. Anschließend bzw. dabei bewegen sich Stecker 2 und Kupplungskörper 8 nun gemeinsam in das Gehäuse 3 hinein, wobei die Ventilkörper 18 und 40 dabei keine Relativbewegung zueinander ausführen. Während dieser Bewegung setzen die Fortsätze 35 auf dem ortsfesten Anschlag 36 auf, so daß in der Folge das gesteuerte Auslaßventil 32 geöffnet wird. Damit findet die Entriegelung des Ventilkörpers 18 statt und das im Druckraum 31 eingesperrte Medium kann sich durch das geöffnete Auslaßventil, d. h. durch die radiale Bohrung 34 und an dem ringförmigen Ventilkörper 33 vorbei in den Innenraum 7 der Muffe ergießen. Dabei tritt auch eine Zusammendrückung der Schließfeder 29 relativ zu der Schließfeder 45 auf, so daß die Gewähr dafür gegeben ist, daß beide Ventilkörper 18 und 40 etwa den einfachen Öffnungshub zurücklegen. Ist dies geschehen, dann hat sich die Stirnfläche 43 auf die Stirnfläche 21 angelegt, wobei gleichzeitig die Kugeln 14 in die Ausweichnut 11 eingetreten sind. Der Bund 47 kann nun über die Kugeln 14 hinweggleiten, so daß diese anschließend in die Verkeilungsnut 48 eintreten können und die zusammengedrückte Gesperrefeder 9 die Möglichkeit eröffnet, daß der Kupplungskörper 8 zusammen mit dem Gehäuse 37 des Steckers 2 aus dem Gehäuse 3 herausbewegt wird bis die Stellung gemäß Fig. 3 erreicht wird.

Stecker 2 und Muffe 1 sind damit miteinander bereits gekuppelt. Beide Ventilkörper 18 und 40 sind um je den einfachen Öffnungshub geöffnet. Sobald dabei die Fortsätze 35 von dem ortsfesten Anschlag 36 freikommen, schließt das gesteuerte Auslaßventil 32, wodurch die Ventilkörper 18 und 40 hydraulisch verriegelt sind. Bei dieser Bewegung kann es infolge der Schließfedern 29 und 45 auch vorkommen, daß beide Ventilkörper 18 und 40 gegen die Anschlagschraube 44 zur Anlage gelangen. Dies kann auch noch dann eintreten, wenn z. B. die muffenseitig vorgesehene Druckmittelquelle eingeschaltet wird. Für diese Fälle besteht jeweils für den Druckraum 31 die Gelegenheit, das Rückschlagventil 50 kurzfristig zu öffnen, so daß infolge des Druckunterschiedes Hydraulikmedium in den saugenden Druckraum 31 nachgefüllt werden kann. Unabhängig von Herstellungstoleranzen werden somit die beiden Ventilkörper 18 und 40 spielfrei an der Anschlagschraube 44 verriegelt. Die Verriegelung wirkt in beiden Richtungen.

Das Auskuppeln eines drucklosen Steckers 2 geschieht wie folgt: Durch Ziehen an dem Stecker 2 gegenüber dem ortsfesten Gehäuse 3 der Muffe 1 bewegt sich der Kupplungskörper 8 um ein gewisses Stück aus dem Gehäuse 3 heraus, wobei auch hier die Gesperrefeder 9 zusammengedrückt wird. Erreichen die Kugeln 14 die Ausweichnut 12, so kann der Stecker 2 ganz herausgezogen werden, wobei gleichzeitig sein Ventilkörper 40 und der Ventilkörer 18 der Muffe 1 in die Schließstellung überführt werden, was durch Krafteinwirkung der jeweiligen Schließfedern 29 und 45 geschieht. Auch der Ventilkörper 18 bewegt sich dabei in die Schließlage, wobei wiederum das Rückschlagventil 50 öffnet und ein Nachströmen bzw. Nachsaugen von Hydraulikmedium aus dem Innenraum 7 in den Druckraum 31 hinein gestattet. Das gesteuerte Auslaßventil 32 ist geschlossen. Es wird schließlich die Stellung gemäß Fig. 1 erreicht.

Die Fig. 1 bis 3 verdeutlichen den Kupplungsvorgang mit einem unter Druck stehenden Stecker 2:

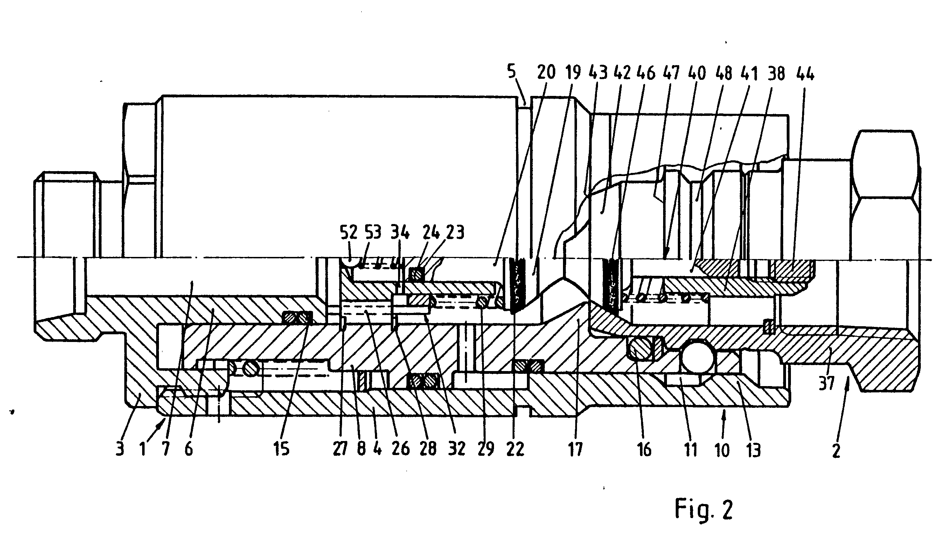

Dabei wird der Stecker 2 zunächst ebenfalls mit seinem Bund 47 an den Kugeln 14 zur Anlage gelangen, so daß beim weiteren Einschieben der Kupplungskörper 8 gegenüber dem Gehäuse 3 in die Muffe eingeschoben wird. Beide Ventilkörper 18 und 40 befinden sich dabei in geschlossener Stellung. Auch hier treffen die Fortsätze 35 auf den ortsfesten Anschlag 36 auf und das gesteuerte Auslaßventil 32 wird geöffnet, so daß die Verriegelung des Ventilkörpers 18 aufgehoben ist, noch bevor die Kugeln 14 in die Ausweichnut 11 eintreten können, wie dies Fig. 2 zeigt. Da der Ventilkörper 40 des Steckers 2 unter Druck steht, verbleibt dieser dabei in geschlossener Stellung und der Ventilkörper 19 öffnet in der Folge um den doppelten Ventilkörperhub, wie dies in Fig. 2 verdeutlicht ist, so daß das im Druckraum 31 eingesperrte Hydraulikmedium über die radialen Bohrungen 34 entsprechend der Volumenverminderung in den Innenraum 7 übertritt. Dabei gelangt die Stirnfläche 43 des Steckers 2 in Anlage an der Stirnfläche 21 des Kupplungskörpers 8 der Muffe. Durch das Überfahren der Kugeln 14 mit dem Bund 47 haben nunmehr die Kugeln 14 Gelegenheit, in die Verkeilungsnut 48 einzutreten, so daß sich die Kraft der zusammengedrückten Gesperrefeder 9 auswirken kann. Dabei bewegt sich der Kupplungskörper 8 so relativ zum Gehäuse 3, daß das Kugelgesperre 10 verriegelt (Fig. 3), während das gesteuerte Auslaßventil 32 noch so lange geöffnet bleibt, bis die Fortsätze 35 von dem ortsfesten Anschlag 36 freikommen. Da das Rückschlagventil 50 zu diesem Zeitpunkt auch bereits geschlossen ist, kann der Ventilkörper 18 nicht mehr als den durchlaufenen Hub zurücklegen. Der Ventilkörper 18 ist um den doppelten Öffnungshub offengehalten, während der Ventilkörper 40 noch geschlossen ist. Nach dem Einschalten der muffenseitig vorgesehenen Druckquelle wird jedoch der Ventilkörper 40 des Steckers 2 geöffnet, wobei der Ventilkörper 18 dem Ventilkörper 40 folgen kann, was einerseits durch den dynamischen Druck, andererseits durch die Kraft der vergleichsweise mehr zusammengedrückten Schließfeder 29 bewirkt wird. Dabei öffnet das Rückschlagventil 50 und läßt Hydraulikmedium von dem Innenraum 7 in den Druckraum 31 überströmen. Dieser Vorgang wird beendet, wenn der Ventilkörper 40 an der Anschlagschraube 44 anschlägt, also den einfachen Öffnungshub zurückgelegt hat. Damit gelangt auch der Ventilkörper 18 in eine solche Stellung, die dem einfachen Ventilkörperhub der Muffe 1 entspricht. Das Nachsaugen des Druckraumes 31 ist beendet. Infolge des sich in der Leitung aufbauenden Druckes wird auch das Rückschlagventil 50 noch kurzzeitig geöffnet, so daß auch im Druckraum 31 ein entsprechender Druck aufgebaut wird, der lediglich um den durch die Druckfeder 53 ausgeübten Druck niedriger ist als der Druck in dem Innenraum 7. Die beiden Ventilkörper 18 und 40 sind dabei spielfrei gegen die Anschlagschraube 44 hydraulisch verriegelt. Nach der anderen Richtung sind die beiden Ventilkörper mechanisch verriegelt. Es ist also in beiden Richtungen eine Verriegelung vorhanden, gleichgültig in welcher Richtung die weitere Durchströmung der Kupplung erfolgt. Das Entkuppeln des Steckers 2 von einer Muffe 1 geschieht in gleicher Weise, wie dies vorher dargelegt wurde.

Es ist weiterhin ersichtlich, daß ein Stecker 2 auch dann entkuppelt werden kann, gleichgültig ob er dabei unter Druck steht oder nicht, wenn er z. B. infolge eines versehentlichen Kupplungsvorganges in eine falsche Muffe 1 eingesteckt wurde, also eine Leitungsverwechselung stattgefunden hat. Dies ist auch unabhängig davon, ob z. B. beim Kuppeln eines unter Druck stehenden Steckers vorher die muffenseitige Druckquelle eingeschaltet wurde oder nicht.

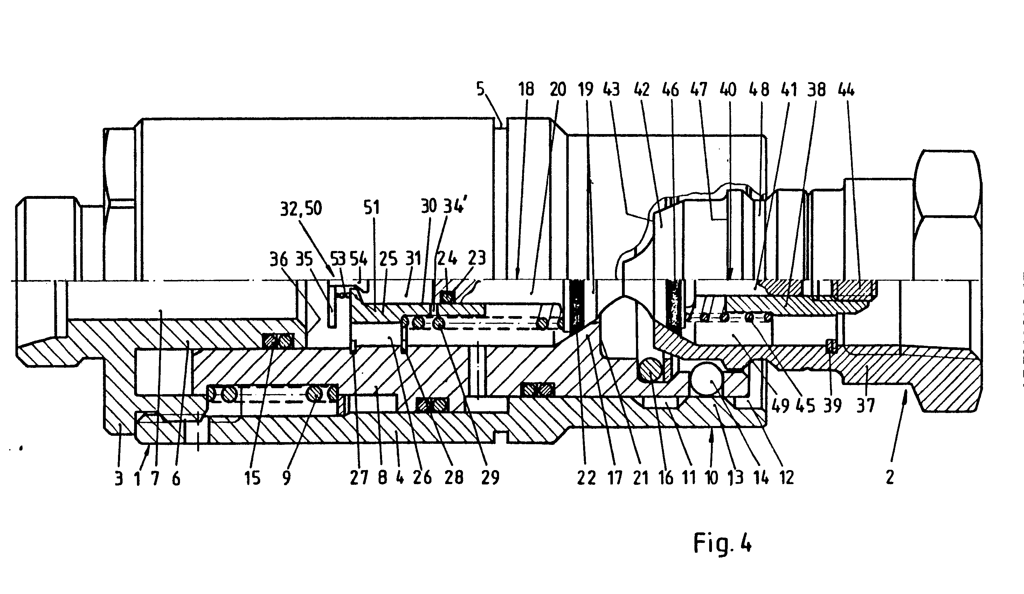

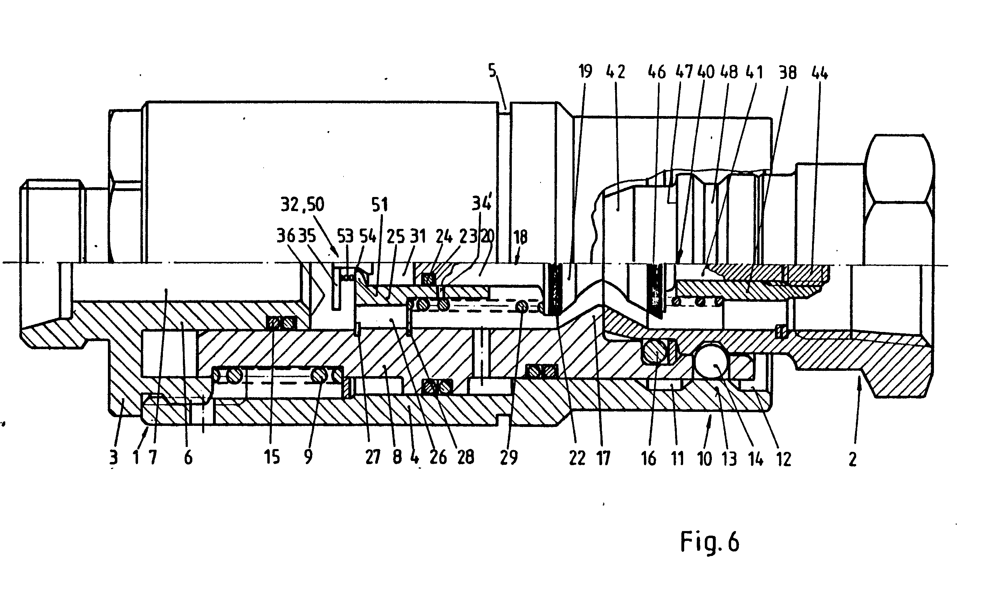

Ein weiteres Ausführungsbeispiel der Erfindung ist in den Fig. 4 bis 6 dargestellt. Für gleiche Teile wie bei dem Ausführungsbeispiel der Fig. 1 bis 3 sind gleiche Bezugszeichen verwendet. Lediglich das gesteuerte Auslaßventil 32 und das Rückschlagventil 50 sind hier baulich vereinigt derart, daß ein gemeinsamer Ventilkörper 54 mit dem Ventilsitz 51 zusammenarbeitet, der die Fortsätze 35 trägt, die mit dem ortsfesten Anschlag 36 zusammenarbeiten. Die Druckfeder 53 ist hier außerhalb des Druckraumes 31 vorgesehen, kann natürlich auch ohne weiteres im Druckraum 31 angeordnet werden. Eine radiale Bohrung 34' ist hier in der Wandung des Sternkörpers relativ zu der Dichtung 24 des Ventilkörpers 18 so vorgesehen, daß der Druckraum 31 mit dem Innenraum 7 über die Bohrung 34' in Verbindung steht, wenn sich der Ventilkörper 18 in der Schließstellung befindet. Es kann nämlich vorkommen, daß bei nicht gekuppeltem Stecker versehentlich Druck von der Druckquelle auf die Muffe gegeben wird, der sich bis in den Druckraum 31 hinein fortpflanzt. Die radiale Bohrung 34' dient dem Druckabbau im Druckraum 31, wenn nachfolgend nach dem Abstellen der Druckquelle ein Stecker mit der Muffe gekuppelt werden soll. Der Ventilkörper 18 läßt sich dann leicht öffnen, wobei das Medium vom Druckraum 31 in den Innenraum 7 verschoben werden kann. Es versteht sich, daß die Dichtung 24 die Bohrung 34' erst dann überfahren darf, wenn andererseits das Rückschlagventil 50 bereits geöffnet hat. Diese Ausführungsform ist besonders einfach aufgebaut und besitzt wenige Einzelteile. Sie hat den weiteren Vorteil, daß der Durchtrittsraum zwischen den Flügeln 26 in keiner Weise eingeschränkt wird.

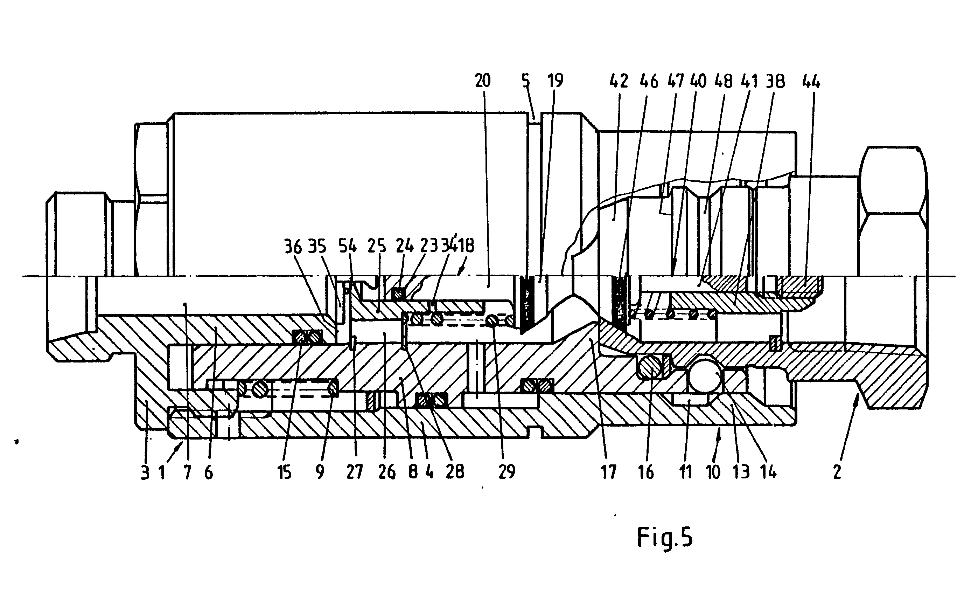

Die Funktion dieses Ausführungsbeispiels ist analog zu dem Ausführungsbeispiel der Fig. 1 bis 3. Anhand der Fig. 4 u. 6 kann das Kuppeln des drucklosen Steckers 2 verfolgt werden, während die Fig. 4, 5 u. 6 die jeweiligen Stadien beim Einkuppeln eines unter Druck stehenden Steckers zeigen.

Bezugszeichenliste:
1 = Muffe
2 = Stecker
3 = Gehäuse
4 = Schiebehülse
5 = Nut
6 = Fortsatz
7 = Innenraum
8 = Kupplungskörper
9 = Gesperrefeder
10 = Kugelgesperre
11 = Ausweichnut
12 = Ausweichnut
13 = Verriegelungsring
14 = Kugel
15 = Dichtung
16 = Dichtung
17 = Rand
18 = Ventilkörper
19 = Kopf
20 = Schaft
21 = Stirnfläche
22 = Dichtung

23 = Nut
24 = Dichtung
25 = Sternkörper
26 = Flügel
27 = Sicherungsring
28 = Sicherungsring
29 = Schließfeder
30 = Zylinderlauffläche
31 = Druckraum
32 = gesteuertes Auslaßventil
33 = Ventilkörper
34 = Bohrung
35 = Fortsatz
36 = ortsfester Anschlag
37 = Gehäuse
38 = Sternkörper
39 = Sicherungsring
40 = Ventilkörper
41 = Schaft
42 = Kopf
43 = Stirnfläche
44 = Anschlagschraube
45 = Schließfeder
46 = Dichtung
47 = Bund
48 = Verkeilungsnut
49 = Innenraum
50 = Rückschlagventil
51 = Ventilsitz
52 = Ventilkörper
53 = Druckfeder
54 = gemeinsamer Ventilkörper

**Patentansprüche**

1. Auch bei unter Druck stehendem Stecker (2) kuppelbare Rohrabreißkupplung für Hydraulikleitungen, bestehend aus zwei ineinander steckbaren und in der gekuppelten Stellung über ein von einer Gesperrefeder (9) belastetes Kugelgesperre (14) zwischen Verriegelungshülse (4) un verschiebbaren Kupplungskörpers (8) verriegelbaren Kupplungshälften in Form des Steckers und einer Muffe (1) mit je einem durch eine Schließfeder (29, 45) in Schließrichtung belasteten, in entkuppelter Stellung der Kupplungshälften in Schließrichtung gehaltenen und in einem in dem jeweiligen Kupplungskörper vorgesehenen Sternkörper (25, 38) geführten Ventilkörper (18, 40), wobei der Ventilkörper des Steckers bis zur Anlage an einem seine Offenstellung begrenzenden Anschlag (44) um den einfachen Ventilkörperhub, der Ventilkörper der Muffe jedoch um den doppelten Ventilkörperhub verschiebbar gelagert ist und ein am Ende des einfachen Ventilkörperhubes der Muffe wirksames ein- und ausrückbares Sperrmittel (31) zur Freigabe des doppelten Ventilkörperhubes bzw. zur Verriegelung der beiden Ventilkörper in der Offenstellung zwischen den Anschlägen vorgesehen ist, wobei ein mit der Verriegelungshülse verbundener gehäuseseitiger Anschlag (36) vorgesehen ist, der innerhalb des einfachen Hubes des Ventilkörpers der Muffe mit dem Sperrmittel in Wirkverbindung tritt, dadurch gekennzeichnet, daß der Sternkörper (25) der Muffe (1) ortsfest an dem verschiebbaren Kupplungskörper (8) gelagert ist und eine Zylinderlauffläche (30) aufweist, daß der Schaft (20) des Ventilkörpers (18) der Muffe kolbenartig ausgebildet und in der Zylinderlauffläche dichtend geführt ist, und daß als Sperrmittel im Innern des Sternkörpers (25) ein von der Zylinderlauffläche (30) und dem Schaft (20) des Ventilkörpers (18) begrenzter Druckraum (31) vorgesehen ist, der einerseits über ein von dem gehäuseseitigen Anschlag (36) gesteuertes Auslaßventil (32) und andererseits über ein in den Druckraum (31) hinein öffnendes Rückschlagventil (50) von dem von Hydraulikmedium durchflossenen Innenraum (7) der Muffe (1) abgetrennt bzw. mit diesem verbunden ist.

2. Rohrabreißkupplung nach Anspruch 1, dadurch gekennzeichnet, daß der Sternkörper (25) auf seiner dem gehäuseseitigen Anschlag (36) zugekehrten Seite koaxial zur Achse der Muffe (1) einen Ventilsitz (51) für den Ventilkörper (52) des Rückschlagventils (50) aufweist.

3. Rohrabreißkupplung nach Anspruch 1 und 2, dadurch gekennzeichnet, daß der Ventilkörper (52) des Rückschlagventils (50) auf einer im Druckraum (31) angeordneten Druckfeder (53) abgestützt ist.

4. Rohrabreißkupplung nach Anspruch 1 und 2, dadurch gekennzeichnet, daß das Rückschlagventil (50) und das gesteuerte Auslaßventil (32) baulich vereinigt sind, und daß der gemeinsame Ventilkörper (54) in Richtung auf den gehäuseseitigen Anschlag (36) in den Innenraum (7) der Muffe (1) vorstehenden Fortsätze (35) aufweist.

5. Rohrabreißkupplung nach Anspruch 4, dadurch gekennzeichnet, daß der gemeinsame Ventilkörper (54) auf einer außerhalb des Druckraumes (31) angeordneten Druckfeder (53) abgestützt ist.

6. Rohrabreißkupplung nach Anspruch 1 und 2, dadurch gekennzeichnet, daß das gesteuerte Auslaßventil (32) einen von dem Ventilkörper (52) des Rückschlagventils (50) getrennten ringförmigen Ventilkörper (33) aufweist, der einen Fortsatz des Sternkörpers (25) umgibt, wobei der Druckraum (31) vermittels einer etwa radial angeordneten Bohrung (34) im Fortsatz an den Innenraum (7) der Muffe (1) anschließbar ist, und daß am ringförmigen Ventilkörper (33) die Flügel (26) des Sternkörpers (25) überbrückende und in Richtung auf den gehäuseseitigen Anschlag (36) vorstehende Fortsätze (35) vorgesehen sind.

7. Rohrabreißkupplung nach Anspruch 6, dadurch gekennzeichnet, daß der ringförmige Ventilkörper (33) des gesteuerten Auslaßventils (32) auf der Schließfeder (29) des Ventilkörpers (18) der Muffe (1) abgestützt ist.

8. Rohrabreißkupplung nach Anspruch 6 und 7, dadurch gekennzeichnet, daß der ringförmige Ventilkörper (33) in der Schließstellung gegen eine kegelförmig angeordnete Sitzfläche am Übergang des Fortsatzes des Sternkörpers (25) zu den Flügeln (26) angedrückt ist.

## Claims

1. Breakaway pipe coupling for hydraulic lines which can be coupled even when the plug (2) is under pressure, consisting of two coupling halves which can be inserted one into the other and, in the coupled position, can be locked between locking sleeve (4) and displaceable coupling body (8) via a ball catch (14) loaded by a catch spring (9), which coupling halves are in the form of the plug and a socket (1) having one valve body (18, 40) each which is loaded by a closing spring (29, 45) in the closing direction, is held in the closing direction in the uncoupled position of the coupling halves and is guided in a star body (25, 38) provided in the respective coupling body, wherein the valve body of the plug is mounted so as to be displaceable by the single valve body stroke until coming to bear against a stop (44) limiting its open position, but the valve body of the socket is mounted so as to be displaceable by the double valve body stroke, and an engageable and disengageable blocking means (31), effective at the end of the single valve body stroke of the socket, is provided for releasing the double valve body stroke or for locking the two valve bodies in the open position between the stops, wherein a housing-side stop (36) connected to the locking sleeve is provided which comes into operative connection with the blocking means within the single stroke of the valve body of the socket, characterized in that the star body (25) of the socket (1) is mounted in a fixed position on the displaceable coupling body (8) and has a cylinder bore (30), that the shank (20) of the valve body (18) of the socket is designed like a piston and is guided in a sealing manner in the cylinder bore, and that a pressure space (31) defined by the cylinder bore (30) and the shank (20) of the valve body (18) is provided as a blocking means in the interior of the star body (25), which pressure space (31), on the one hand via an outlet valve (32) controlled by the housing-side stop (36) and on the other hand via a non-return valve (50) opening into the pressure space (31), is separated from or connected to the inner space (7) of the socket (1) through which hydraulic medium flows.

2. Breakaway pipe coupling according to Claim 1, characterized in that the star body (25), on its side facing the housing-side stop (36) and coaxial to the axis of the socket (1), has a valve seat (51) for the valve body (52) of the non-return valve (50).

3. Breakaway pipe coupling according to Claims 1 and 2, characterized in that the valve body (52) of the non-return valve (50) is supported on a compression spring (53) arranged in the pressure space (31).

4. Breakaway pipe coupling according to Claims 1 and 2, characterized in that the non-return valve (50) and the controlled outlet valve (32) are constructionally combined, and that the common valve body (54) has extensions (35) protruding in the direction of the housing-side stop (36) into the inner space (7) of the socket (1).

5. Breakaway pipe coupling according to Claim 4, characterized in that the common valve body (54) is supported on a compression spring (53) arranged outside the pressure space (31).

6. Breakaway pipe coupling according to Claims 1 and 2, characterized in that the controlled outlet valve (32) has an annular valve body (33) which is separate from the valve body (52) of the non-return valve (50) and surrounds an extension of the star body (25), wherein the pressure space (31) can be connected to the inner space (7) of the socket (1) by means of an approximately radially arranged bore (34) in the extension, and that extensions (35), bridging the lobes (26) of lhe star body (25) and protruding in the direction of the housing-side stop (36), are provided on the annular valve body (33).

7. Breakaway pipe coupling according to Claim 6, characterized in that the annular valve body (33) of the controlled outlet valve (32) is supported on the closing spring (29) of the valve body (18) of the socket (1).

8. Breakaway pipe coupling according to Claims 6 and 7, characeried in that the annular valve body (33), in the closing position, is pressed against a tapered seating surface at the transition of the extension of the star body (25) to the lobes (26).

## Revendications

1. Raccord de rupture pour conduits hydrauliques pouvant être couplé à une fiche mâle (2) sous pression, constitué de deux moitiés de raccord enfichables l'une dans l'autre et verrouillables en position accouplée au moyen d'un encliquetage à billes (14) sollicité par un ressort d'encliquetage (9) entre la douille de verrouillage (4) et le corps coulissant (8) du raccord, ces moitiés de raccord étant sous la forme de la fiche mâle et d'un manchon (1), ayant l'un et l'autre un clapet (15, 40) sollicité par un ressort de fermeture (29, 45) dans le sens de fermeture, maintenu en position fermée en situation désaccouplée des moitiés du raccord et guidé dans un corps en étoile (25, 38) prévu dans l'élément de raccord respectif, le clapet de la fiche mâle étant monté pour coulisser jusqu'a la rencontre d'une butée (44) limitant sa position d'ouverture tandis, toutefois, que le clapet du manchon est monté pour coulisser selon la double course de clapet, un moyen de blocage (31) embrayable et débrayable étant prévu à l'extrémité de la course simple du clapet du manchon, ce moyen agissant pour libérer la double course du clapet et pour verrouiller les deux clapets en position ouverte entre les butées, une butée (36) fixée à la douille de verrouillage sur le côté correspondant au boîtier étant prévue, cette butée coopérant avec les moyen de blocage à l'intérieur de la course simple du clapet du manchon,

caractérisé en ce que le corps en étoile (25) du manchon est monté fixe sur le corps coulissant (8) du raccord et présente une portée cylindrique (30), en ce que la tige (20) du clapet (18) du manchon est conformée à la manière d'un piston et est guidée de manière étanche dans la portée cylindrique, et en ce qu'il est prévu, comme moyen de blocage dans l'intérieur du corps en étoile (25), une chambre à pression (31) limitée par la portée cylindrique (30) et la tige (20) du clapet (18), pouvant être respectivement séparée de, et mise en communication avec, l'espace intérieur (7) du manchon (1) dans lequel circule le fluide hydraulique, au moyen, d'un part, d'une soupape de décharge (32) commandée par la butée (36) située du côté du boîtier et, d'autre part au moyen d'un clapet de retenue (50) s'ouvrant en direction de l'intérieur de la chambre à pression (31).

2. Raccord de rupture selon la revendication 1, caractérisé en ce que le corps en étoile (25) présente, sur son côté opposé à la butée (36) située du côté du boîtier, un siège de clapet (51) coaxial à l'axe du manchon (1), pour le clapet (52) de la soupape de retenue (50).

3. Raccord de rupture selon les revendication 1 et 2, caractérisé en ce que le clapet (52) de la soupape de retenue (50) s'appuie contre un ressort à compression (53) disposé dans la chambre à pression (31).

4. Raccord de rupture selon les revendication 1 et 2, caractérisé en ce que la soupape de retenue (50) et la soupape de décharge commandée (32) sont constituées d'une seule pièce, et en ce que le clapet commun (54) présente, en direction de la butée (36) située du côté du boîtier, des prolongements (35) dépassant dans l'espace intérieur du manchon (1).

5. Raccord de rupture selon la revendication 4, caractérisé en ce que le clapet commun (54) prend appui contre un ressort à compression (53) disposé en dehors de la chambre à pression (31).

6. Raccord de rupture selon les revendications 1 et 2, caractérisé en ce que la soupape de décharge commandée (32) présente un clapet annulaire (33) séparé du clapet (52) de la soupape de retenue (50), entourant un prolongement du corps en étoile (25), la chambre à pression (31) pouvant être mise en communication avec l'espace intérieur (7) du manchon (1) à travers un orifice (34) sensiblement radial, ménagé dans le prolongement, et en ce que sont prévus sur le clapet annulaire (33) des prolongements (35) passant au delà des ailettes (26) du corps en étoile et dépassant en direction de la butée (36) située du côté du boîtier.

7. Raccord de rupture selon la revendication 6, caractérisé en ce que le clapet annulaire (33) de la soupape de décharge commandée (32) prend appui contre le ressort de fermeture (29) du clapet (18) du manchon (1).

8. Raccord de rupture selon les revendications 6 et 7, caractérisé en ce que le clapet annulaire (33) en position fermée est pressé contre un siège tronconique ménagé sur la transition entre le prolongement du corps en étoile (25) et les ailettes (26).

Fig. 1

Fig. 2

Fig. 3

Fig. 4

EP 0 184 702 B1

Fig.5

EP 0 184 702 B1

Fig. 6